# EUROPEAN PATENT APPLICATION

(11) **EP 1 795 374 A1**
(43) Date of publication of application: **13.06.2007**
(21) Application number: 05785493.7
(22) Date of filing: 22.09.2005
(51) Int. Cl.: B60C 11/11, B60C 11/04, B60C 11/13

(54) **PNEUMATIC TIRE**

(30) Priority: 27.09.2004 JP 2004280685
(71) Applicant: Bridgestone Corporation, Tokyo 104-8340 (JP)
(72) Inventor: KUSANO, Akio c/o BRIDGESTONE CORPORATION, Chuo-ku, Tokyo 1048340 (JP)
(74) Representative: Whalley, Kevin
(86) International application number: PCT/JP2005/017475
(87) International publication number: WO 2006/035666

(57) **Abstract**

[Subject] To provide a pneumatic tire whose snow performance is improved without affecting its dry performance.

[Measures for Addressing the Subject] Step portions 22F and 22R that are continuous so as to protrude respectively from step-in sides and kick-out sides of each of blocks 20 configuring a tread portion 16 are disposed in a pneumatic tire, and the step portions 22 are disposed in a staggered manner in the tread portion 16. Thus, even when the step portions 22 are disposed, the rigidity of the blocks 20 does not decline that much and dry performance is not affected that much. Further, snow performance can be improved by the edge pressure of the step portions 22.

## Description

### Technical Field

The present invention relates to a pneumatic tire including blocks in a tread portion.

### Background Art

Conventionally, forming steps in blocks configuring a tread portion in order to improve tire traveling performance has been proposed (e.g., see Japanese Patent Application Laid-Open (JP-A) No. 63-176704, JP-A No. 3-186406 and JP-A No. 4-278809).

For example, in order to improve traction performance on snow (snow performance, hereinafter), main grooves in the tire circumferential direction are disposed in the tread portion and lug grooves leading from the outermost main groove to the ground contact end are disposed. The lug grooves formed in this manner cause shear force by forming snow columns inside the grooves when they bite into a snow surface, and further cause traction force on snow in combination with an edge effect (wedge effect).

Incidentally, when such lug grooves are formed in the tread portion, the rigidity of the tread portion declines. For this reason, the ground contact pressure in the vicinity of the grooves drops, which affects the steering stability when traveling on a dry road surface (dry performance, hereinafter), and noise during travel becomes large because it becomes easier for block vibration to occur. In order to overcome this, in JP-A No. 63-176704, for example, as shown in FIG. 5, disposing a sub-groove 90 from the outermost main groove of the main grooves disposed in the tire circumferential direction to the ground contact end, and forming, in a block 94, a step portion 92 at an intermediate height in the depth direction of the sub-groove 90 has been proposed.

However, when a measure noted above is performed, the block rigidity may decline and new problems might occur. Even when a measure to add sipes is performed, the block rigidity may decline.

### Disclosure of the Invention

### Subject that the Invention is to Address

In view of the above-described circumstances, it is an object of the present invention to provide a pneumatic tire whose snow performance is improved without affecting its dry performance.

### Measures for Addressing the Subject

The invention recited in claim 1 is a pneumatic tire comprising blocks configuring a tread portion of the tire and step portions protruding toward groove portions from a part of at least one of step-in side end portions and kick-out side end portions of the blocks and lower than the height of the blocks.

In this manner, in the invention recited in claim 1, the step portions protrude toward groove portions from a part of at least one of step-in side end portions and kick-out side end portions of each of the blocks configuring the tread portion, the step portions are disposed without trimming the blocks, the height of the step portions is lower than the height of the blocks, and optimization of snow performance and dry performance is enabled.

Thus, even when the step portions are disposed, the block rigidity does not decline that much, and dry performance is not affected that much. Moreover, snow performance can be improved by the edge pressure of the step portions.

It is preferable for a length of the step portions to be in the range of 1.0 mm to 2.0 mm. When the length is less than 1.0 mm, it is not easy to obtain sufficient snow performance from the edge pressure. Further, when the length is greater than 2.0 mm, it is easy for the block rigidity to decline, and it is easy for dry performance to be affected.

It is preferable for a depth of the step portions to be in the range of 1.0 mm to 2.0 mm. When the depth is less than 1.0 mm, it is not easy to obtain sufficient snow performance from the edge pressure. Further, when the depth is greater than 2.0 mm, it is easy for the block rigidity to decline, and it is easy for dry performance to be affected.

When the length and the depth of the step portions are both in the range of 1.0 mm to 2.0 mm, they become the optimum dimensions with which edge pressure can be sufficiently obtained, and there is little decline in the block rigidity.

It is preferable for a width in the tire width direction of the step portions to be in the range of 30% to 100% of the block width. In this case, like in the invention recited in claim 2, it is preferable for the step portions to be formed at an inner side in the tire width direction at the step-in side end portions of the blocks and to be formed at an outer side in the tire width direction at the kick-out side end portions of the blocks. Thus, traction and braking can be separated and an improvement in snow performance can be realized more effectively.

The invention recited in claim 3 is a pneumatic tire comprising blocks configured by tire circumferential direction grooves and lug grooves intersecting the circumferential direction grooves and step portions protruding toward groove portions from a part of at least one of both circumferential direction end surfaces of the blocks and lower than the height of the blocks.

Thus, similar to the invention recited in claim 1, even when the step portions are disposed, the block rigidity does not decline that much, and dry performance is not affected that much and, moreover, snow performance can be improved by the edge pressure of the step portions.

The invention recited in claim 4 comprises the pneumatic tire of claim 3, wherein the step portions are formed at an inner side in the tire width direction at circumferential direction step-in side end portions of the blocks and are formed at an outer side in the tire width direction at circumferential direction kick-out side end portions of the blocks.

Thus, similar to the invention recited in claim 2, traction and braking can be separated and an improvement in snow performance can be realized more effectively.

The invention recited in claim 5 comprises the pneumatic tire of claim 2 or claim 4, wherein the step portions extend toward outer side end portions from inner side end portions in the tire width direction at the circumferential direction step-in side end portions of the blocks and extend toward inner side end portions from outer side end portions in the tire width direction at the circumferential direction kick-out side end portions of the blocks.

In the invention recited in claim 6, the step portions are disposed in a staggered manner in the tread portion.

Thus, optimization of the block rigidity becomes easy.

In the invention recited in claim 7, sipes having zigzag shapes when seen in plan view are formed in the blocks.

Thus, snow performance can be improved.

It should be noted that a pattern having directionality may also be formed in the tread portion. Thus, each function in the tire width direction during step-in and during kick-out can be more effectively exhibited, and more advanced optimization becomes possible.

### Effects of the Invention

Because the present invention has the above-described configuration, it can realize a pneumatic tire whose snow performance is improved without causing steering stability when traveling on a dry road surface to drop that much.

### Brief Description of the Drawings

FIG. 1 is a cross-sectional view in the width direction of a pneumatic tire pertaining to one embodiment of the present invention.
FIG. 2 is a partial plan view showing a tread portion of the pneumatic tire pertaining to one embodiment of the present invention.
FIG. 3 is a partial cross-sectional view of a block configuring the tread portion of the pneumatic tire pertaining to one embodiment of the present invention (partial cross-sectional view seen from arrow 3-3 of FIG. 2).
FIG. 4A is a schematic plan view of a block configuring the tread portion of the pneumatic tire pertaining to one embodiment of the present invention.
FIG. 4B is a schematic side view seen from arrow 4B-4B of FIG. 4A.

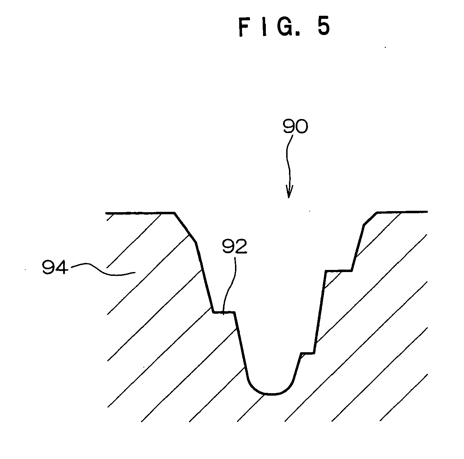

FIG. 5 is a partial cross-sectional view showing a step portion of a conventional pneumatic tire.

### Best Mode for Implementing the Invention

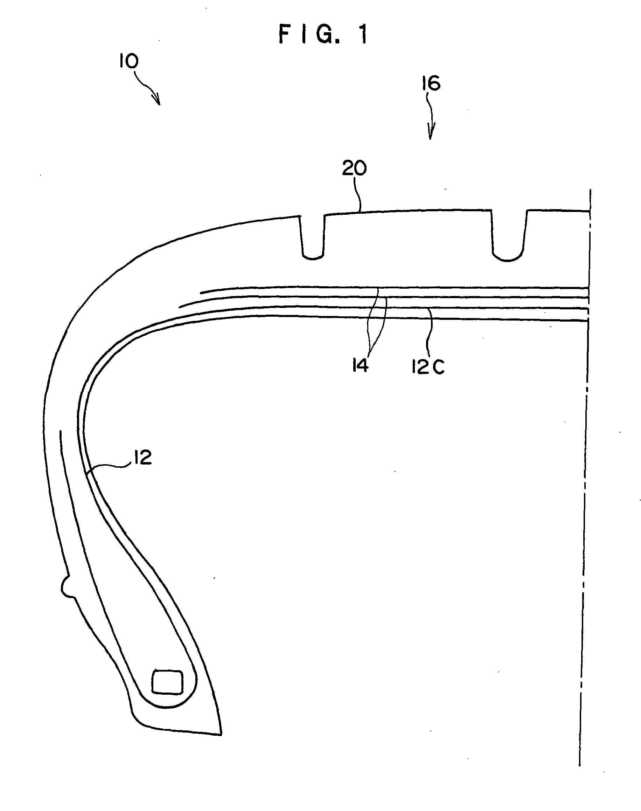

A mode of implementing the present invention will be described below by way of an embodiment. As shown in FIG. 1, a pneumatic tire 10 pertaining to one embodiment of the present invention includes, on the outer side of a crown portion 12C of a carcass 12 extending in a toroidal shape, belts 14 and a tread portion 16 in which grooves are disposed.

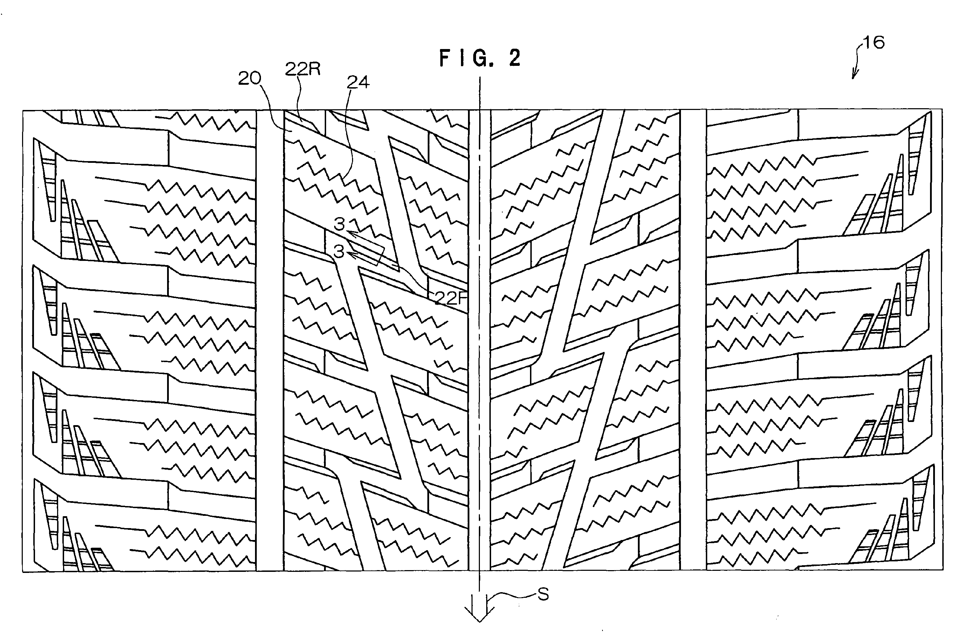

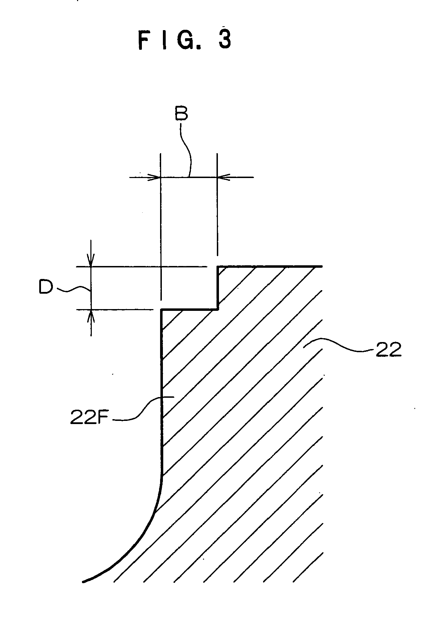

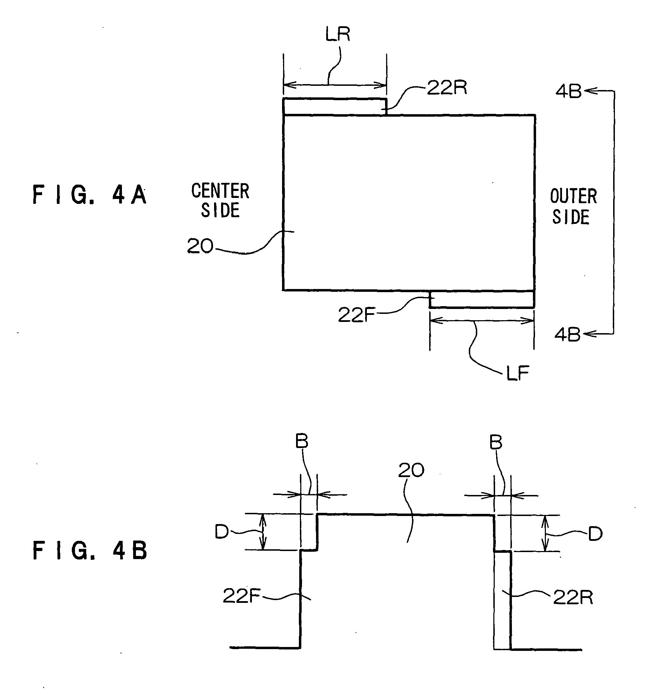

As shown in FIG. 2 to FIG. 4, the tread portion 16 is configured to rotate in a rotational direction S when moving forward. Further, the tread portion 16 includes step portions 22F and 22R that are continuous so as to protrude respectively from a substantially half part in a tire width direction of step-in sides and kick-out sides of each of blocks 20 configuring the tread portion 16. The height of the step portions 22F and 22R is lower than the height of the block.

Further, the step portions 22F on the step-in sides are formed at an inner side in the tire width direction, and the step portions 22R on the kick-out sides are formed at an outer side in the tire width direction. As a result, the step portions 22 are disposed in a staggered manner in the tread surface.

Further, step portions are not formed on the kick-out sides of block portions where the step portions 22F are formed on the step-in sides, and step portions are not formed on the step-in sides of block portions where the step portions 22R are formed on the kick-out sides.

It is preferable for a length B of the step portions 22F and 22R to be in the range of 1.0 mm to 2.0 mm. When the length B is less than 1.0 mm, it is not easy to obtain sufficient snow performance from the edge pressure. Further, when the length B is greater than 2.0 mm, it is easy for the block rigidity to decline and it is easy for dry performance to be affected.

It is preferable for a depth D of the step portions 22F and 22R to be in the range of 1.0 mm to 2.0 mm. When the depth D is less than 1.0 mm, it is not easy to obtain sufficient snow performance from the edge pressure. Further, when the depth D is greater than 2.0 mm, it is easy for the block rigidity to decline and it is easy for dry performance to be affected.

When the length B and the depth D of the step portions 22F and 22R are both in the range of 1.0 mm to 2.0 mm, they become the optimum dimensions with which edge pressure can be sufficiently obtained, and there is little decline in the block rigidity.

Further, sipes 24 having zigzag shapes when seen in plan view are formed in each of the blocks 20, thus snow performance can be improved.

As described above, in the present embodiment, the step portions 22F and 22R are continuous so as to protrude respectively from the step-in sides and the kick-out sides of each of the blocks 20 configuring the tread portion 16, and the step portions 22F and 22R are disposed without trimming the blocks 20. Additionally, the length B and the depth D of the step portions 22F and 22R are defined in the above-described range. Further, the step portions 22F on the step-in sides are formed at an inner side in the tire width direction, and the step portions 22R on the kick-out sides are formed at an outer side in the tire width direction. As a result, the step portions 22 are disposed in a staggered manner in the tread surface.

Consequently, even when the step portions 22F and 22R are disposed, the block rigidity does not decline that much and snow performance can be improved by the step portions. Moreover, the step portions 22F and 22R are disposed in a staggered manner in the tread portion 16, thus optimization of the block rigidity becomes easy.

### <Experimental Example>

In the present experimental example, an experiment was performed to evaluate dry performance and snow performance within a period of time when traveling speed was 10 km/h to 45 km/h using a European front-engine rear-drive car. In the present experimental example, the tire size was 225/50R17. Further, the rim width was 17x7.5, and the internal pressure was 240 kPa at the front side and 270 kPa at the rear side. The experimental conditions and evaluation results described in detail below are shown in Table 1.

**[Table 1]**

| | | Example | Comparative Example 1 | Comparative Example 2 | Conventional Example |
|---|---|---|---|---|---|
| Step Portions | Length (mm) | 1.5 | 0.8 | 2.5 | None |
| | Depth (mm) | 2.0 | 5.0 | 2.5 | None |
| Dry Performance | | 7.0 | 6.5 | 6.0 | 7.0 |
| Snow Performance | | 125 | 105 | 120 | 100 |

In the present experimental example, first, dry performance and snow performance were examined when a conventional pneumatic tire was attached to a vehicle. The evaluation of dry performance was performed on BSPG and the evaluation of snow performance was performed on HPG (see Conventional Example in Table 1). BSPG refers to Bridgestone Corporation's Tochigi Proving Ground and HPG refers to Bridgestone Corporation's Hokkaido Proving Ground.

Moreover, the pneumatic tire 10 in which the step portions 22F and 22R having a length B of 1.5 mm and a depth D of 2.0 mm were formed was attached to a vehicle and an experiment to evaluate dry performance and snow performance was performed. The evaluation of dry performance was similarly performed on BSPG and the evaluation of snow performance was performed on HPG using 100 as the evaluation index of the conventional pneumatic tire (see Example in Table 1). In comparison to the conventional pneumatic tire, dry performance did not drop at all and snow performance significantly improved.

Further, the pneumatic tire 10 in which the step portions 22F and 22R having a length B of 0.8 mm and a depth D of 5.0 mm were formed was attached to a vehicle and dry performance and snow performance were similarly evaluated (see Comparative Example 1 in Table 1). In comparison to the conventional pneumatic tire, dry performance dropped a little but snow performance improved.

Further, the pneumatic tire 10 in which the step portions 22F and 22R having a length B of 2.5 mm and a depth D of 2.5 mm were formed was attached to a vehicle and dry performance and snow performance were similarly evaluated (see Comparative Example 2 in Table 1). In comparison to the conventional pneumatic tire, dry performance dropped a little but snow performance significantly improved.

A mode of implementing the present invention has been described above by way of an embodiment, but the above-described embodiment is one example and can be variously altered and implemented in a range that does not depart from the scope of the invention. Further, it goes without saying that the scope of the rights of the present invention is not limited to the above-described embodiment.

### Industrial Applicability

Step portions are continuous so as to protrude respectively from step-in sides and kick-out sides of each of blocks configuring a tread portion, and even when the step portions are disposed, block rigidity does not decline that much, and dry performance is not affected that much. Moreover, snow performance can be improved by the edge pressure of the step portions.

### Description of the Reference Numerals

- 10: Pneumatic Tire
- 16: Tread Portion
- 20: Blocks
- 22F, R: Step Portions
- 24: Sipes

## Claims

1. A pneumatic tire comprising:
blocks configuring a tread portion of the tire; and
step portions protruding toward groove portions from a part of at least one of step-in side end portions and kick-out side end portions of the blocks and lower than the height of the blocks.

2. The pneumatic tire of claim 1, wherein the step portions are formed at an inner side in the tire width direction at the step-in side end portions of the blocks and are formed at an outer side in the tire width direction at the kick-out side end portions of the blocks.

3. A pneumatic tire comprising:
blocks configured by tire circumferential direction grooves and lug grooves intersecting the circumferential direction grooves; and
step portions protruding toward groove portions from a part of at least one of both circumferential direction end surfaces of the blocks and lower than the height of the blocks.

4. The pneumatic tire of claim 3, wherein the step portions are formed at an inner side in the tire width direction at circumferential direction step-in side end portions of the blocks and are formed at an outer side in the tire width direction at circumferential direction kick-out side end portions of the blocks.

5. The pneumatic tire of claim 2 or claim 4, wherein the step portions extend toward outer side end portions from inner side end portions in the tire width direction at the circumferential direction step-in side end portions of the blocks and extend toward inner side end portions from outer side end portions in the tire width direction at the circumferential direction kick-out side end portions of the blocks.

6. The pneumatic tire of claim 4 or claim 5, wherein the step portions are disposed in a staggered manner in the tread portion.

7. The pneumatic tire of any one of claims 1 to 6, wherein sipes having zigzag shapes when seen in plan view are formed in the blocks.
